**Europäisches Patentamt**

**European Patent Office**

**Office européen des brevets**

(19)

(11) Veröffentlichungsnummer: **0 178 369**
**B1**

# (12) EUROPÄISCHE PATENTSCHRIFT

(45) Veröffentlichungstag der Patentschrift:
**25.10.89**

(51) Int. Cl.⁴: **F 16 B 12/32**

(21) Anmeldenummer: **85102013.1**

(22) Anmeldetag: **23.02.85**

(54) **Verbindungselement.**

(30) Priorität: **16.10.84 DE 3437805**

(43) Veröffentlichungstag der Anmeldung:
**23.04.86 Patentblatt 86/17**

(45) Bekanntmachung des Hinweises auf die Patenterteilung:
**25.10.89 Patentblatt 89/43**

(84) Benannte Vertragsstaaten:
**AT BE CH DE FR GB IT LI NL SE**

(56) Entgegenhaltungen:
**EP-A-0 000 525**
**EP-A-0 059 463**
**DE-A-3 128 595**
**DE-U-7 341 203**

(73) Patentinhaber: **Exibelco GmbH, Dufourstrasse 11 Postfach 336, CH- 4010 Basel (CH)**

(72) Erfinder: **Maier, Helmut, Baumgartenweg 17, CH- 4124 Schönenbuch (CH)**
Erfinder: **Neumann, Bruno, Bergstrasse 38, B-4700 Eupen (BE)**
Erfinder: **Schaafhausen, Ludwig R., Dipl.- Phys., Ammelburgstrasse 34, D-6000 Frankfurt am Main 1 (DE)**

(74) Vertreter: **Schaafhausen, Ludwig Richard, Dipl.- Phys., KEIL & SCHAAFHAUSEN Patentanwälte Eysseneckstrasse 31, D-6000 Frankfurt am Main 1 (DE)**

EP 0 178 369 B1

## Beschreibung

Die Erfindung betrifft ein Verbindungselement zum lösbaren Verbinden von Profilstangen, von denen eine als Stützenprofil bezeichnete Profilstange hinterschnittene Längsnuten und die andere als Zargenprofil bezeichnete Profilstange ein Hohlprofil zur stirnseitigen Aufnahme des Verbindungselementes aufweisen, wobei das Verbindungselement aus einem Gehäuse mit Kupplungsnasen zum Einstecken in den Eingang einer der Längsnuten besteht, in dem ein als Riegel ausgebildetes Halteelement mit einem einzigen, aus der Stirnseite des Gehäuses hervorragenden Verbindungshaken angeordnet und mittels eines das Halteelement durchsetzenden Exzenterbolzens in Längsrichtung des Verbindungselementes bewegbar ist, wobei der Exzenterbolzen mit seinem Handhabungsende in einer Querbohrung der das Verbindungselement aufnehmenden Profilstange nachgiebig eingerastet gehalten und durch eine an der gegenüberliegenden Seite des Halteelementes angreifenden Feder druckknopfartig aus dem Gehäuse herausgedrückt wird, und mit einer im Gehäuse nach innen ansteigenden Schräge, die mit einer an dem Halteelement ausgebildeten Gegenschräge in Eingriff bringbar ist, damit der Verbindungshaken des Halteelementes während einer Anzugsbewegung den Rand der Längsnut hintergreift.

Derartige Verbindungselemente sind in vielfältigen Ausgestaltungen bekannt und werden insbesondere zur Herstellung von Gestellen verwendet, die im Messe-, Ladenbau od.dgl. eingesetzt werden. Die Verbindung der Stützenprofile und der Zargenprofile soll einerseits äußerst fest, andererseits aber auch leicht herstellbar und wieder lösbar sein.

Bei einem aus der DE-A-3 128 595 bekannten Gestell besteht das Verbindungselement aus einem Lagergehäuse mit einer ansteigenden Keilfläche und einem längsverschieblichen als Stahlblechstreifen ausgebildeten Halteelement, das eine Gegenschräge aufweist, die durch Federkraft an die Keilfläche angedrückt wird. An der Stirnfläche des Lagergehäuses sind zwei Kupplungsnasen fest angeordnet, zwischen denen sich das Halteelement bewegt, wobei sich während eines Verklemmvorganges das Halteelement und die Kupplungsnasen an den einander gegenüberliegenden Laibungsseiten des Nuteinganges des Stützenprofils anlegen sollen. Über einen Exzenterbolzen läßt sich das Halteelement in Längsrichtung des Schlosses bewegen, wobei das Halteelement nicht nur eine Längsbewegung, sondern durch Auflaufen auf der im Gehäuse ausgebildeten keilförmigen Schräge auch eine Querbewegung ausführt. Durch diese gleichzeitig ablaufenden beiden Bewegungskomponenten soll nach der DE-A-3 128 595 eine besonders sichere und feste Verbindung der beiden Profilstangen erreicht werden.

Dieses Verbindungsprinzip ist zwar aus dem DE-U-7 341 203 bereits bekannt, soll durch die DE-A-3 128 595 aber dadurch noch verbessert werden, daß das Verbindungselement aus möglichst einfachen, leicht montierbaren und wieder zerlegbaren Bestandteilen besteht, die sich bequem in die Profilstangen einsetzen und bedarfsweise wieder herausnehmen lassen. Dennoch bereitet das Montieren und Zerlegen der aus der DE-A-3 128 595 bekannten Verbindungselemente erhebliche Schwierigkeiten. So müssen sowohl der Exzenter, als auch das aus einem Stahlblechstreifen bestehende Halteelement von einer Stirnseite in das Gehäuse eingeführt werden. Insbesondere das Einsetzen des Halteelementes ist nicht einfach, da die aus dem Stahlblechstreifen herausgeformte Federzunge zum Einführen an das Halteelement gedrückt werden muß. Außerdem müssen zur Montage und zur Demontage zusätzliche Fenster sowie Neigungsflächen und Rampen auf den Innenflächen der Seitenwände des Gehäuses ausgebildet sein. Dadurch, daß bei dem bekannten Verbindungselement während des eigentlichen Kupplungsvorganges zwei senkrecht zueinander gerichtete Bewegungsabläufe erfolgen, treten Scherkräfte auf, die einerseits die Profilstangen verstärkt belasten und andererseits zu einem ungewollten Lösen der Verbindung führen können.

Den gleichen Nachteil hat auch das aus der EP-A-059 463 bekannte Verbindungselement. Bei diesem Verbindungselement wird das als Riegel ausgebildete Halteelement während des gesamten Anzieh- und Verspannvorganges quer zur Gehäuselängsrichtung nach außen gedrückt.

Aufgabe der Erfindung ist es daher, ein Verbindungselement der eingangs genannten Art zu schaffen, das einfach montierbar ist und mit dem unter möglichst geringer Beanspruchung der Profilstangen eine sichere, stark belastbare, nicht unbeabsichtigt lösbare Verbindung zwischen zwei Profilstangen, insbesondere einem Stützenprofil und einem Zargenprofil, herstellbar ist.

Diese Aufgabe wird erfindungsgemäß dadurch gelöst, daß das Gehäuse zweiteilig ist, daß das Halteelement durch Drehen des Exzenterbolzens entlang der Schräge im Gehäuse aus einer Mittelstellung in eine Ausgangslage für den Festziehvorgang bewegbar ist, in der der Verbindungshaken die Längsnut hintergreift, daß das Halteelement bei einem Weiterdrehen des Exzenterbolzens, insbesondere während des Verklemmvorganges ausschließlich eine Längsbewegung ausführt und daß der zur Führung des Halteelementes vorgesehene Exzenterbolzen zwischen Exzenterkopf und Exzenterscheibe eine konzentrisch zum Exzenterkopf angeordnete Stützscheibe aufweist. Da das Gehäuse des erfindungsgemäßen Verbindungselementes zweiteilig ausgebildet ist, brauchen keinerlei zusätzlichen Führungsflächen in dem Gehäuse vorgesehen sein; die Einzelteile brauchen nur noch in die geöffneten Gehäuseteile eingelegt und das Gehäuse danach verschlossen werden. Dadurch, daß das Halteelement während des Verspann- und Verklemmvorganges ausschließlich eine Längsbewegung ausführt, treten keinerlei Quermomente mehr auf, so daß ein einfaches kräftiges Anziehen des Halteelements zur Herstellung einer festen, unlösbaren Verbindung führt. Diese Führung des Halteelementes wird insbesondere durch die neuartige Ausgestaltung des Exzenterbolzens ermöglicht, der zwischen dem Exzenterkopf und der Exzenterscheibe eine zusätzliche, konzentrisch zum Exzenterkopf angeordnete Stützscheibe aufweist. Damit können zusätzliche Führungs- und Steuervorrichtungen an dem Halteelement oder im Gehäuse entfallen.

Wenn das zweiteilige Gehäuse erfindungsgemäß aus einem Bodenteil und einem Deckel besteht, lassen sich die Einzelteile des Verbindungselements wie das Halteelement oder der Exzenterbolzen einfach in dem Bodenteil anordnen und durch den Deckel verschließen. Dieses Verschließen des Gehäuses und die feste Halterung des Deckels an dem Bodenteil läßt sich erfindungsgemäß in einfacher Weise dadurch erreichen, daß das Bodenteil mindestens eine Ausnehmung zur Aufnahme eines an dem Deckel ausgebildeten Zapfens oder Stiftes aufweist.

Da das Verbindungselement rechteckförmig ausgebildet ist, ist es vorteilhaft, zwei Ausnehmungen zur Aufnahme jeweils eines zweier an dem Deckel angebrachten Zapfen oder Stifte in dem Bodenteil vorzusehen. Gemäß einer bevorzugten Ausführungsform der Erfindung ist die Ausnehmung zur Aufnahme eines Zapfens oder Stiftes so bemaßt, daß der Zapfen oder Stift mit Preßsitz in der Ausnehmung sitzt. Damit läßt sich das Bodenteil und der Deckel unlösbar miteinander verbinden, wodurch eine Manipulation an dem Verbindungselement verhindert wird, die zu einer Fehlfunktion führen könnte.

In Weiterbildung dieses Erfindungsgedankens ist die Ausnehmung zur Aufnahme eines Zapfens oder Stiftes auf der Rückseite des Bodenteils geschlossen. Dadurch wird das Gehäuseinnere nach außen abgedichtet. Eine besonders feste Verbindung läßt sich erfindungsgemäß dadurch herstellen, daß die beiden Ausnehmungen an entgegengesetzten Endabschnitten des Bodenteils angeordnet sind, wobei die eine Ausnehmung symmetrisch und die andere Ausnehmung seitlich versetzt zur Mittellängslinie des Bodenteils angeordnet sind. Durch die seitliche Versetzung der einen Ausnehmung kann diese in einem Bereich verstärkten Gehäusematerials vorgesehen sein, so daß von dem Bodenteil größere Kräfte aufgenommen werden können.

Gemäß einer äußerst praktischen Ausführungsform der Erfindung ist im Bodenteil eine Vertiefung zur Aufnahme einer Feder vorgesehen. Diese Vertiefung ist zweckmäßigerweise kreisförmig. Damit läßt sich ohne zusätzliche Hilfsmittel eine eindeutige Positionierung der Feder im Gehäuse erreichen, die darüber hinaus eine sehr einfache, weil handelsübliche Spiral-Druckfeder sein kann.

Um bei möglichst geringer Wandstärke des Gehäuses eine möglichst große Belastbarkeit zu erreichen, sind erfindungsgemäß auf der Rückseite des Bodenteils Verstärkungsrippen ausgebildet, die sich annähernd über die gesamte Länge des Bodenteils erstrecken.

Eine besonders einfache Halterung des Exzenterbolzens wird dadurch erreicht, daß im Deckel eine gestufte Öffnung für den Exzenterkopf vorgesehen ist, an deren Stufe die Stützscheibe des Exzenterbolzens zur Anlage kommt.

Das erfindungsgemäße Verbindungselement ist nicht nur leicht, sondern auch extrem belastbar, da sowohl das Bodenteil als auch der Deckel aus glasfaserverstärktem Kunststoff besteht.

Die durch die Drehbewegung des Exzenterbolzens auftretenden Drehkräfte werden gemäß einer weiteren Ausgestaltung des Erfindungsgedankens dadurch kompensiert, daß das Halteelement im Bereich der seitlich versetzten Ausnehmung im Bodenteil eine Aussparung aufweist, deren längsverlaufende Kante an einem nach oben vorstehenden Teil des Bodenteils zur Anlage kommt. Dieser vorstehende Teil des Bodenteils wird erfindungsgemäß von einer Materialanhäufung gebildet. Durch diese Ausgestaltung wird für das Halteelement eine zusätzliche Abstützung geschaffen, die verhindert, daß von dem Halteelement aufgenommene Drehkräfte direkt auf die relativ dünne Seitenwand des Bodenteils übertragen werden. In dieser an einem Ende des Bodenteils seitlich angeordneten Materialanhäufung ist auch die Ausnehmung zur Aufnahme des seitlich versetzten Zapfens oder Stiftes des Deckels vorgesehen. Dieser ist eine zusätzliche Verstärkung für diesen Gehäuseabschnitt.

Um eine besonders einfache Drehbegrenzung für den Exzenterbolzen zu schaffen, ist die Öffnung für den Exzenterbolzen im Halteelement rechteckförmig ausgebildet, wobei die Längsachse des Rechteckes senkrecht zur Längsachse des Halteelementes verläuft. Die Abmessungen sind dabei an die Abmessungen des verwendeten Exzenters anzupassen.

Gemäß einer weiteren Ausgestaltung des Erfindungsgedankens weist das Halteelement eine Abbiegung auf, die auf einer Seite mit einer auf der Deckelinnenseite ausgebildeten Auflaufkurve und auf der anderen Seite mit der im Bodenteil des Gehäuses ausgebildeten Schräge nacheinander in Eingriff gelangt. Die auf der Deckelinnenseite ausgebildete Auflaufkurve dient dazu, das Halteelement am Ende seiner Auswärtsbewegung aus der Zugbewegungslinie soweit zur Mitte des Gehäuses hin zu bewegen, daß sich der Verbindungshaken im Bereich der Eingangsweite der Profilnut befindet, in welcher das Verbindungselement außer Eingriff mit der hinterschnittenen Längsnut gelangen kann und damit das das Verbindungselement enthaltende Zargenprofil von dem Stützenprofil getrennt werden kann. Die im Bodenteil des Gehäuses ausgebildete Schräge dient als Abstützung für das außer Eingriff mit der Auflaufkurve des Deckels befindliche Halteelement, insbesondere wenn eine Verbindung zwischen zwei Profilstangen hergestellt ist. Der Verbindungshaken läßt sich danach nicht mehr zur Mitte des Gehäuses hin bewegen, so daß auch bei einer äußeren Krafteinwirkung der Verbindungshaken nicht in Querrichtung verschoben und die Verbindung unbeabsichtigt wieder gelöst werden kann.

Wie für die Zapfen des Deckels, so ist auch für den Lagerzapfen des Exzenterbolzens im Bodenteil des Gehäuses eine Ausnehmung vorgesehen, die nach außen verschlossen ist. Damit weist die gesamte Rückseite des Gehäuses keinerlei Öffnungen auf. Gemäß weiteren Ausgestaltungen der Erfindung hat die Exzenterscheibe annähernd gleichen Durchmesser wie der Lagerzapfen des Exzenterbolzens und die Stützscheibe des Exzenterbolzens hat einen Durchmesser, der größer ist als der des Exzenterkopfes, der wiederum größer als der Durchmesser der Exzenterscheibe und des Lagerzapfen ist.

Die Erfindung wird nachfolgend anhand eines Ausführungsbeispieles näher erläutert, das in der Zeichnung dargestellt ist.

Es zeigen:

Fig. 1 einen Längsschnitt durch ein erfindungsgemäßes Verbindungselement,
Fig. 2 einen Längsschnitt durch das Bodenteil des Verbindungselementes gemäß Fig. 1,
Fig. 3 eine Vorderansicht des Bodenteils gemäß Fig. 2 (in Fig. 2 von rechts gesehen),
Fig. 4 einen Längsschnitt entlang der Linie A - A in Fig. 3,
Fig. 5 eine Ansicht der Rückseite des Bodenteils gemäß Fig. 2 (in Fig. 2 von links gesehen),

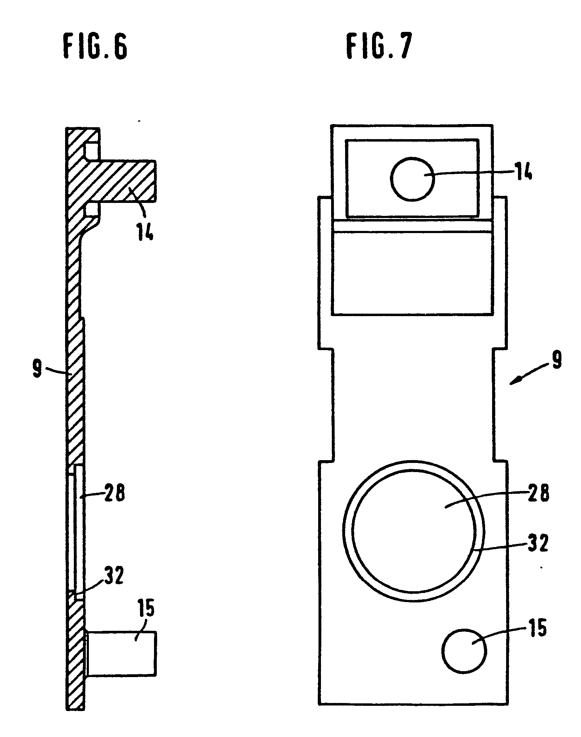

Fig. 6 einen Längsschnitt durch den Deckel des Verbindungselementes gemäß Fig. 1,
Fig. 7 eine Vorderansicht des Deckels gemäß Fig. 6 (in Fig. 6 von rechts gesehen),
Fig. 8 eine Ansicht des in Fig. 1 im Längsschnitt dargestellten Halteelementes und
Fig. 9 einen Teillängsschnitt durch einen erfindungsgemäßen Exzenterbolzen.

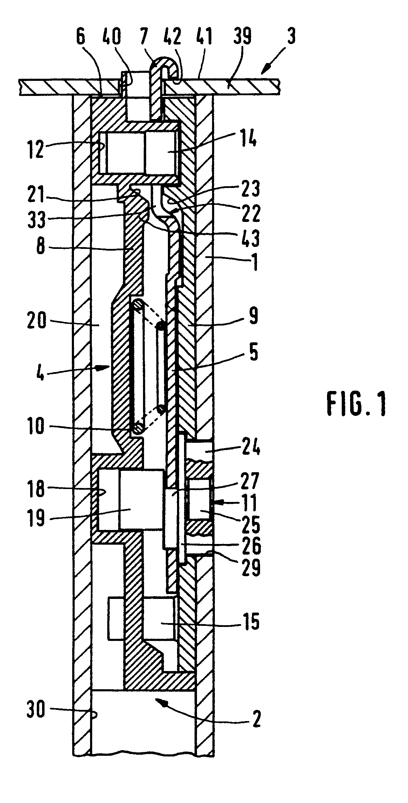

In Fig. 1 ist eine als Zargenprofil bezeichnete Profilstange 1 gezeigt, in deren Hohlprofil ein Verbindungselement 2 eingesetzt ist, durch das das Zargenprofil 1 mit einer als Stützenprofil bezeichneten Profilstange 3 verbunden ist.

Das Verbindungselement 2 besteht aus einem Gehäuse 4, in dem ein als Riegel 5 ausgebildetes Halteelement längsverschieblich angeordnet ist. Das aus der Stirnseite 6 des Gehäuses 4 herausragende Ende des Riegels 5 ist als zurückgebogener Verbindungshaken 7 ausgebildet.

Das Gehäuse 4 ist zweiteilig ausgeführt und besteht aus einem Bodenteil 8 und einem Deckel 9. Neben dem Riegel 5 ist in dem Gehäuse 4 noch eine Druckfeder 10 und ein Exzenterbolzen 11 angeordnet.

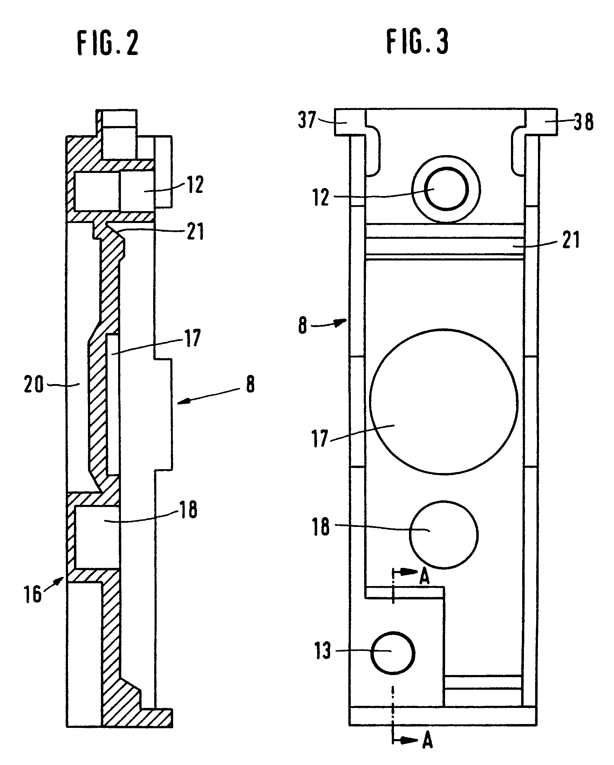

Nachfolgend wird zunächst das in den Fig. 2 bis 5 näher dargestellte Bodenteil beschrieben:

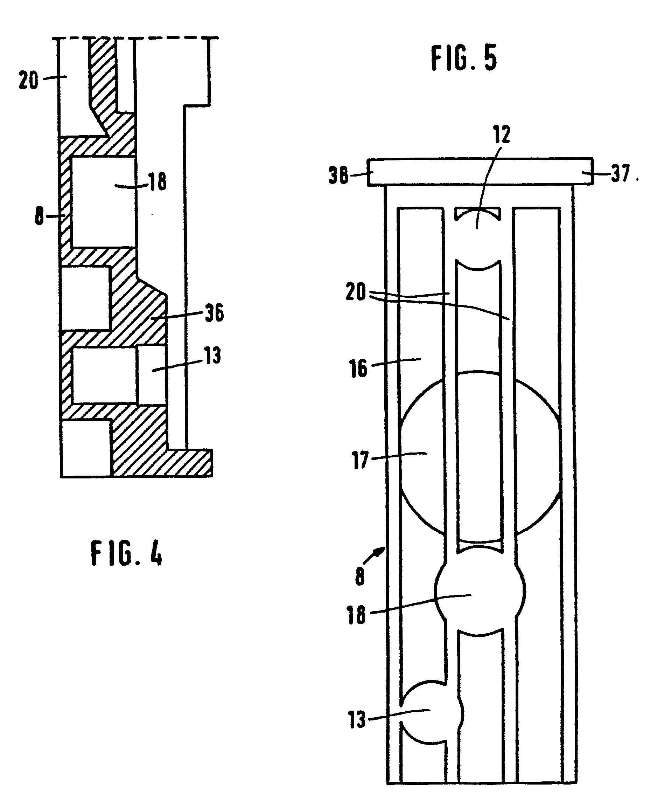

An entgegengesetzten Endabschnitten des Bodenteils 4 sind zwei kreisförmige Ausnehmungen 12 und 13 ausgebildet, in die zwei an dem Deckel 9 angebrachte Zapfen 14 und 15 mit Preßsitz einführbar sind. Die Ausnehmungen 12 und 13 sind auf der Rückseite 16 des Bodenteils 8 (Fig. 5) geschlossen.

Etwa in der Mitte des Bodenteils 8 des Gehäuses 4 ist eine kreisförmige Vertiefung 17 für die Druckfeder 10 ausgebildet, mittels der die Lage der spiralförmigen Druckfeder 10 in dem Gehäuse 4 festgelegt ist.

Eine zwischen der Ausnehmung 13 für den Zapfen 15 und der Vertiefung 17 für die Druckfeder 10 im Bodenteil 8 des Gehäuses 4 vorgesehene weitere Ausnehmung 18 dient als Lagerbüchse für den Lagerzapfen 19 des Exzenterbolzens 11. Die Ausnehmung 18 ist zur Rückseite 16 des Bodenteils 8 hin ebenfalls verschlossen.

Wie insbesondere aus den Figuren 2 und 4 zu ersehen ist, sind die Ausnehmungen 12 und 13 zur Aufnahme der Zapfen 14 und 15 in Bereichen einer Materialanhäufung des aus glasfaserverstärktem Kunststoff bestehenden Bodenteils 8 angeordnet. Zur Verstärkung des dazwischenliegenden Bodenteilabschnittes weist dieser Verstärkungsrippen 20 auf, die sich, wie aus Fig. 5 zu ersehen ist, über annähernd die gesamte Länge der Rückseite 16 des Bodenteils 8 erstrecken können.

Im Bereich der Ausnehmung 12 ist im Bodenteil 8 eine nach innen ansteigende Schräge 21 vorgesehen, deren Funktion weiter unten im Zusammenhang mit einer Abbiegung 22 des Riegels 5 und einer an der Innenseite des ebenfalls aus einem glasfaserverstärktem Kunststoff bestehenden Deckels 9 ausgebildeten Auflaufkurve 23 näher beschrieben wird.

Der Riegel 5 läßt sich durch den Exzenterbolzen 11 in Längsrichtung des Verbindungselementes 2 bewegen. Der Exzenterbolzen 11 besteht aus einem Exzenterkopf 24 mit einer als Werkzeugaufnahme dienenden zentralen Öffnung 25. An den Exzenterkopf 24 schließt sich eine hierzu konzentrisch angeordnete Stützscheibe 26 an, die einen etwas größeren Durchmesser als der Exzenterkopf 24 hat. Mit der Stützscheibe 26 ist eine Exzenterscheibe 27 einstückig verbunden, an die sich wiederum der Lagerzapfen 19 des Exzenterbolzens 11 anschließt.

Auf der der Ausnehmung 18 im Bodenteil 8 gegenüberliegenden Seite des Gehäuses 4 weist der Deckel 9 eine gestufte Öffnung 28 für den Exzenterkopf 24 des Exzenterbolzens 11 auf. Der zur Betätigung des Exzenterbolzens 11 dienende Exzenterkopf 24 ragt etwa um die Dicke der Wandung des Zargenprofils 1 aus dem Gehäuse 4 des Verbindungselementes 2 heraus, um in eine Querbohrung 29 im Zargenprofil 1 eingreifen zu können, wenn das Verbindungselement 2 in das Hohlprofil 30 des Zargenprofils 1 eingesetzt ist.

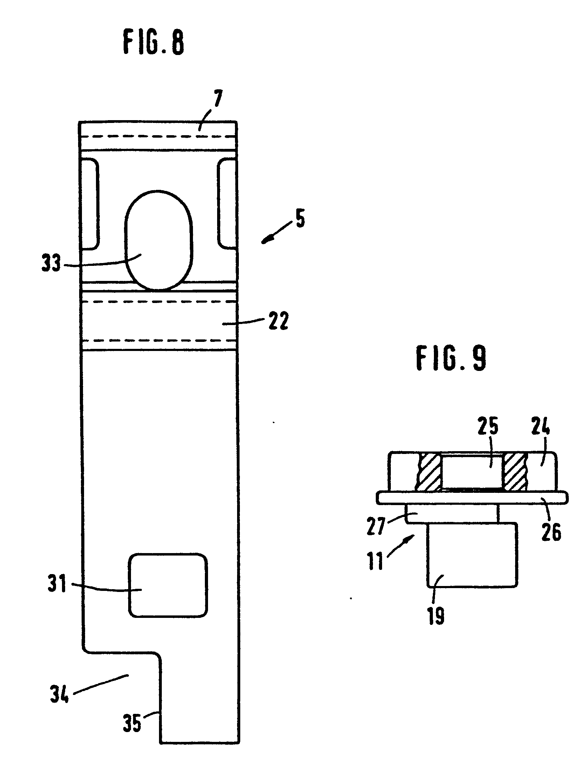

Der Exzenterbolzen 11 wird durch die Druckfeder 10, die den Riegel 5 gegen den Deckel 9 zu drücken versucht, in der in Fig. 1 gezeigten eingerasteten Stellung gehalten. Wie aus Fig. 8 zu ersehen ist, weist der Riegel 5 eine rechteckförmige Öffnung 31 auf, durch die der Exzenterbolzen 11 tritt. Dabei kommt der Riegel 5 an der Stützscheibe 26 des Exzenterbolzens 11 zur Anlage, die sich auf ihrer gegenüberliegenden Seite an der Stufe 32 der Öffnung 28 in dem Deckel 9 abstützt. Die Öffnung 31 ist dabei so bemessen, daß der Exzenterbolzen 11 keine vollständige Umdrehung ausführen kann, sondern vorher an einer Seitenwand der Öffnung 31 zur Anlage kommt, wodurch der Verschiebungsweg des Riegels 5 begrenzt wird.

Wie aus Fig. 8 zu ersehen ist, weist der Riegel 5 zwischen der Abbiegung 22 und dem den Riegel 5 an einer Längsseite abschließenden Verbindungshaken 7 eine in Längsrichtung ovale Durchtrittsöffnung 33 für den Zapfen 14 auf. An dem dem Haken 7 gegenüberliegenden Ende des Riegels 5 ist eine Aussparung 34 vorgesehen, deren Längskante 35 an der Seitenwand einer Materialanhäufung 36 (Fig. 4) des Bodenteils 8 bei einer Drehbetätigung des Exzenterbolzens 11 zur Anlage kommt. In der Mitte der Materialanhäufung 36 ist die Ausnehmung 13 für die Aufnahme des Zapfens 15 ausgebildet.

Das Verbindungselement 2 wird aus den oben beschriebenen Einzelteilen wie folgt zusammengesetzt:

In die Vertiefung 17 des auf seiner Rückenseite 16 liegenden Bodenteils 8 des zweiteiligen Gehäuses 4 wird die als Spiralfeder ausgebildete Druckfeder 10 eingelegt. Danach wird der Exzenterbolzen 11 in den Deckel 9 eingesetzt, wobei die Stützscheibe 26 des Exzenterbolzens an der Stufe 32 der Öffnung 28 zur Anlage kommt. Sodann wird der Riegel 5 mit seiner Öffnung 31 so in den Exzenterbolzen 11 eingesetzt, daß der Riegel 5 an der anderen Seite der Stützscheibe 26 anliegt. Diese aus Deckel 9, Exzenterbolzen 11 und Riegel 5 bestehende Einheit wird danach auf das Bodenteil aufgesetzt, indem die Zapfen 14 und 15 des Deckels 9 in die Ausnehmungen 12 und 13 im Bodenteil 8 eingreifen, wo sie durch äußere Krafteinwirkung auf den Deckel 9 mit Preßsitz eingedrückt werden. Durch entsprechende Dimensionierung der Zapfen 14, 15 und der Ausnehmungen 12, 13 läßt sich erreichen, daß das Gehäuse 4 nur noch durch Beschädigung geöffnet werden kann.

Das Gehäuse 4 des Verbindungselementes 2 ist so bemessen, daß es den Hohlraum 30 des Zargenprofils 1 weitgehend ausfüllt. Als Kupplungsnasen ausgebildete seitliche Vorsprünge 37 und 38 sorgen dafür, daß das Verbindungselement nicht vollständig in das Zargenprofil hineinrutscht, wo es nur schwierig wieder herauszubekommen wäre.

Zum Einsetzen der Verbindungselemente 2 sind die Zargenprofile 1 derart vorbereitet, daß die Querbohrungen 29 in den Zargenprofilen einen solchen Abstand von den freien Enden der Zargenprofile 1, von wo aus die Verbindungselemente 2 eingeschoben werden, haben, daß die Exzenterköpfe 24 in die Querbohrungen 29 einrasten, wenn die Stirnseiten 6 der Gehäuse 4 sich etwas innerhalb des Zargenprofiles befinden. So läßt sich ein Zargenprofil 1 fest an einem Stützprofil 3 befestigen, was mittels des Verbindungselementes 2 wie nachfolgend beschrieben erfolgt:

Um das Verbindungselement 2 in ein Zargenprofil 1 einzuführen, wird der aus dem Deckel 9 herausragende Exzenterkopf 24 des Exzenterbolzens 11 entgegen der Kraft der Druckfeder 10 in das Gehäuse 4 eingedrückt, so daß das Verbindungselement in den Hohlraum der Profilstange eingeschoben werden kann. Dieses Einführen erfolgt soweit, bis der Exzenterkopf 24 des druckknopfartig eingedrückten Exzenterbolzens 11 in den Bereich der gestuften Öffnung 28 im Deckel 9 gelangt. Dort wird der Exzenterbolzen 11 von der Druckfeder 10 über den Riegel 9 soweit nach außen gedrückt, bis die Stützscheibe 26 an der Stufe 32 der Deckelöffnung 28 zur Anlage kommt. In dieser Stellung ragt der Exzenterkopf 24 soweit durch die Querbohrung 29 in dem Zargenprofil 1, daß die Oberfläche des Exzenterkopfes 24 annähernd mit der Außenwand des Zargenprofils 1 abschließt.

Um den zum Deckel 9 hin umgebogenen Verbindungshaken 7 in einer hinterschnittene Längsnut einer anderen Profilstange (des Stützenprofils 3) einführen zu können, muß der Verbindungshaken 7 in eine Mittelstellung gebracht werden. Mittels eines Betätigungswerkzeuges, das in die zentrale Öffnung 25 im Exzenterkopf 24 des Exzenterbolzens 11 einsetzbar ist, wird der Riegel 5 in eine Lösestellung gebracht; hierzu wird er aus dem Gehäuse rausbewegt. Während dieser Auswärtsbewegung kommt die Abbiegung 22 des Riegels 5 in den Bereich der Auflaufkurve 23 an der Innenseite des Deckels 9. Bei einer weiteren Drehbetätigung des Exzenterbolzens 11 wird der Riegel 5 entlang der Auflaufkurve 23 in die Mitte des Gehäuses 4 bewegt. Diese Auswärtsbewegung wird dadurch begrenzt, daß die Exzenterscheibe 27 des Exzenterbolzens 11 an der einen Seitenkante der Öffnung 31 in dem Riegel 5 zur Anlage kommt und sich dort verklemmt.

In dieser Endstellung kann der Verbindungshaken 7 des Verbindungselementes 2 durch eine Eintrittsöffnung 40 in die hinterschnittene Längsnut 39 des Stützenprofils 1 eingeführt. Die Verbindung der beiden Profilstangen 1 und 3 erfolgt wie nachfolgend beschrieben:

Durch Drehen des Exzenterbolzens 11 in der entgegengesetzten Richtung wird der Riegel 5 entlang der Schräge 21 im Gehäuse 4 wieder in seiner Ausgangslage zurückbewegt, in der der Riegel 5 an dem Deckel 9 plan anliegt. In dieser Lage wird der Riegel 5 durch die Druckfeder 10 gehalten. In dieser Ausgangsstellung besteht zwischen der Endkante des Verbindungshakens 7 und der Nutinnenwand 41 der hinterschnittenen Längsnut 39 des Stützprofils 3 ein relativ großer Abstand (ca. 1 bis 2 mm). Um nun die beiden Profilstangen 1 und 3 fest miteinander zu verbinden, wird der Exzenterbolzen 11 weitergedreht, wodurch der Riegel 5 weiter angezogen wird. Während dieses Festziehvorganges, in dem sich die Endkante 42 des Verbindungshakens 7 bereits in ihrer endgültigen Position über der Nutinnenwand 41 der Profilstange 3 befindet, wird der Riegel also nur noch angezogen. Dieser Vorgang wird beendet, wenn die Endkante 42 des Verbindungshakens 7 mit der Nutinnenwand 41 der hinterschnittenen Längsnut 39 in Eingriff tritt, was in Fig. 1 dargestellt ist. Die Arretierung erfolgt durch ein Verklemmen des Exzenterbolzens an einer Seitenfläche der Öffnung 31 im Riegel 5.

Wie insbesondere aus Fig. 1 zu ersehen ist, dient die durch die Schräge 21 im Bodenteil 8 des Gehäuses 4 gebildete Erhebung 43 als Abstützung für den Riegel 5 gegen ein unbeabsichtigtes, die Verbindung lösendes, in die Mitte drücken des Riegels 5. Gleichzeitig dient die Schräge 21 als Zwangsführung für den Riegel 5 während der Anfangsphase des Zurückziehvorganges.

**Bezugszeichenliste**

| | |
|---|---|
| 1 | Zargenprofil |
| 2 | Verbindungselement |
| 3 | Stützenprofil |
| 4 | Gehäuse |
| 5 | Halteelement (Riegel) |
| 6 | Stirnseite von 4 |
| 7 | Verbindungshaken |
| 8 | Bodenteil |
| 9 | Deckel |
| 10 | Druckfeder |
| 11 | Exzenterbolzen |
| 12 | Ausnehmung |
| 13 | Ausnehmung |
| 14 | Zapfen |
| 15 | Zapfen |
| 16 | Rückseite von 8 |
| 17 | Vertiefung |
| 18 | Ausnehmung (Lagerbüchse) |
| 19 | Lagerzapfen von 11 |
| 20 | Verstärkungsrippen |
| 21 | Schräge |
| 22 | Abbiegung |
| 23 | Auflaufkurve |
| 24 | Exzenterkopf |
| 25 | Zentrale Öffnung |
| 26 | Stützscheibe |
| 27 | Exzenterscheibe |
| 28 | Öffnung |
| 29 | Querbohrung |
| 30 | Hohlprofil |
| 31 | Öffnung |
| 32 | Stufe |
| 33 | Durchtrittsöffnung |
| 34 | Aussparung |
| 35 | Längskante |
| 36 | Materialanhäufung |
| 37 | Seitlicher Vorsprung |
| 38 | Seitlicher Vorsprung |
| 39 | Hinterschnittene Längsnut |
| 40 | Eintrittsöffnung |
| 41 | Nutinnenwand |
| 42 | Endkante |
| 43 | Erhebung |

**Patentansprüche**

1. Verbindungselement (2) zum lösbaren Verbinden von Profilstangen, von denen eine Profilstange (3) hinterschnittene Längsnuten (39) und die andere Profilstange (1) ein Hohlprofil zur stirnseitigen Aufnahme des Verbindungselementes (2) aufweisen, wobei das Verbindungselement (2) aus einem Gehäuse (4) mit Kupplungsnasen (37, 38) zum Einstecken in den Eingang (40) einer der Längsnuten (39) besteht, in dem ein als Riegel ausgebildetes Halteelement (5) mit einem einzigen, aus der Stirnseite (6) des Gehäuses (4) hervorragenden Verbindungshaken (7) angeordnet und mittels eines das Halteelement (5) durchsetzenden Exzenterbolzens (11) in Längsrichtung des Verbindungselementes bewegbar ist, wobei der Exzenterbolzen mit seinem Handhabungsende in einer Querbohrung (29) der das Verbindungselement (2) aufnehmenden Profilstange (1) nachgiebig eingerastet gehalten und durch eine an der gegenüberliegenden Seite des Halteelementes angreifenden Feder (10) druckknopfartig aus dem Gehäuse (4) herausgedrückt wird, und mit einer im Gehäuse nach innen ansteigenden Schräge (21), die mit einer an dem Halteelement (5) ausgebildeten Gegenschräge in Eingriff bringbar ist, damit der Verbindungshaken (7) des Halteelementes (5) während einer Anzugsbewegung den Rand der Längsnut (39) hintergreift, dadurch gekennzeichnet, daß das Gehäuse (4) zweiteilig ist, daß das Halteelement (5) durch Drehen des Exzenterbolzens (11) entlang der Schräge (21) im Gehäuse (4) aus einer Mittelstellung in eine Ausgangslage für den Festziehvorgang bewegbar ist, in der der Verbindungshaken (7) die Längsnut (39) hintergreift, daß das Halteelement (5) bei einem Weiterdrehen des Exzenterbolzens (11), insbesondere während des Verklemmvorganges, ausschließlich eine Längsbewegung ausführt und daß der zur Führung des Halteelementes (5) vorgesehene Exzenterbolzen (11) zwischen Exzenterkopf (24) und Exzenterscheibe (27) eine konzentrisch zum Exzenterkopf (24) angeordnete Stützscheibe (26) aufweist.

2. Verbindungselement nach Anspruch 1 dadurch gekennzeichnet, daß das Gehäuse (4) aus einem Bodenteil (8) und einem Deckel (9) besteht, wobei das Bodenteil (8) mindestens eine Ausnehmung (12) zur Aufnahme eines an dem Deckel angebrachten Zapfens oder Stiftes (14) aufweist.

3. Verbindungselement nach Anspruch 2, dadurch gekennzeichnet, daß das Bodenteil (8) zwei Ausnehmungen (12, 13) zur Aufnahme jeweils eines zweier an dem Deckel (9) angebrachten Zapfen (14, 15) oder Stifte aufweist und daß die Ausnehmungen (12, 13) zur Aufnahme eines Zapfens oder Stiftes (14, 15) so bemaßt sind, daß der Zapfen oder Stift mit Preßsitz in der Ausnehmung sitzt.

4. Verbindungselement nach Anspruch 3, dadurch gekennzeichnet, daß die Ausnehmungen (12, 13) zur Aufnahme eines Zapfens oder Stiftes (14, 15) auf der Rückseite (16) des Bodenteils (8) geschlossen und an entgegengesetzten Endabschnitten des Bodenteils (8) angeordnet sind, wobei die eine Ausnehmung (12) symmetrisch und die andere Ausnehmung (13) seitlich versetzt zur Mittellängslinie des Bodenteils (8) angeordnet sind.

5. Verbindungselement nach Anspruch 2, dadurch gekennzeichnet, daß im Bodenteil (8) eine Vertiefung (17) zur Aufnahme einer Feder (10), insbesondere einer Spiral-Druckfeder vorgesehen ist.

6. Verbindungselement nach einem der vorhergehenden Ansprüche, dadurch gekennzeichnet, daß auf der Rückseite (16) des Bodenteils (8) Verstärkungsrippen (20) ausgebildet sind, die sich annähernd über die gesamte Länge des Bodenteils (8) erstrecken.

7. Verbindungselement nach Anspruch 1 und 2, dadurch gekennzeichnet, daß im Deckel (9) eine gestufte Öffnung (28) für den Exzenterkopf (24) vorgesehen ist, an deren Stufe (32) die Stützscheibe (26) des Exzenterbolzens (11) zur Anlage kommt.

8. Verbindungselement nach einem der vorhergehenden Ansprüche, dadurch gekennzeichnet, daß sowohl das Bodenteil (8), als auch der Deckel (9) aus glasfaserverstärktem Kunststoff bestehen.

9. Verbindungselement nach Anspruch 1 dadurch gekennzeichnet, daß das Halteelement (5) im Bereich der seitlich versetzten Ausnehmung (13) im Bodenteil (8) eine Aussparung (34) aufweist, deren längsverlaufende Kante (35) an einem nach oben vorstehenden Teil (36) des Bodenteils (8) zur Anlage kommt, das von einer Materialanhäufung (36) gebildet wird.

10. Verbindungselement nach einem der Ansprüche 1 oder 9, dadurch gekennzeichnet, daß die Öffnung (31) für den Exzenterbolzen (11) im Halteelement (5) rechteckförmig ausgebildet ist, wobei die Längsachse des Rechteckes senkrecht zur Längsachse des Halteelementes (5) verläuft.

11. Verbindungselement nach einem der Ansprüche 1 oder 8, dadurch gekennzeichnet, daß das Halteelement (5) eine Abbiegung aufweist, die auf einer Seite mit einer auf der Deckelinnenseite ausgebildeten Auflaufkurve (23) und auf der anderen Seite mit der im Bodenteil (8) des Gehäuses (4) ausgebildeten Schräge (21) nacheinander in Eingriff gelangt.

12. Verbindungselement nach einem der vorhergehenden Ansprüche, dadurch gekennzeichnet, daß der aus der Stirnseite (6) des Gehäuses (4) hervorragende Verbindungshaken (7) zum Deckel (9) hin umgebogen ist.

13. Verbindungselement nach Anspruch 1, dadurch gekennzeichnet, daß der Lagerzapfen (19) des Exzenterbolzens (11) in einer im Bodenteil (8) ausgebildeten, nach außen verschlossenen Lagerbüchse (18) geführt ist.

14. Verbindungselement nach einem der vorhergehenden Ansprüche, dadurch gekennzeichnet, daß die Exzenterscheibe (27) annähernd gleichen Durchmesser wie der Lagerzapfen (19) des Exzenterbolzens (11) hat und daß die Stützscheibe (26) des Exzenterbolzens (11) einen Durchmesser hat, der größer ist als der des Exzenterkopfes (24), der wiederum größer als der Durchmesser der Exzenterscheibe (27) und des Lagerzapfens (19) ist.

**Claims**

1. Connecting element (2) for the releasable connection of profiled bars, of which one profiled bar (3) has undercut longitudinal grooves (39) and the other profiled bar (1) has a hollow profile for receiving at its end the connecting element (2), the connecting element (2) consisting of a housing (4) with coupling projections (37, 38) for insertion into the entrance (40) of one of the longitudinal grooves (39), in which housing there is arranged a retaining element (5) constructed in the form of a bolt with a single connecting hook (7) projecting from the front end (6) of the housing (4) and the retaining element is movable in the longitudinal direction of the connecting element by means of an eccentric bolt (11) passing through the retaining element, the eccentric bolt with its manipulated end being held resiliently locked in a transverse bore (29) of the profiled bar (1) receiving the connecting element (2) and being pressed in the manner of a pushbutton out of the housing (4) by a spring (10) engaging the opposite side of the retaining element, and the connecting element having a face (21) sloping inwardly and upwardly in the housing which is engageable with a counter slope formed on the retaining element (5) so that the connecting hook (7) of the retaining element (5) engages behind the edge of the longitudinal groove (39) during a tightening movement, characterized in that the housing (4) is in two parts, that the retaining element (5) is movable, by rotating the eccentric bolt (11), along the sloping face (21) in the housing (4) from a middle position into a starting position for the tightening process, in which the connecting hook (7) engages behind the longitudinal groove (39), that the retaining element (5) on further rotation of the eccentric bolt (11), in particular during the clamping process, executes exclusively a longitudinal movement and that the eccentric bolt (11) provided for guiding the retaining element (5) has between the eccentric head (24) and the eccentric disc (27) a supporting disc (26) arranged concentrically with the eccentric head (24).

2. A connecting element according to claim 1, characterized in that the housing (4) consists of a bottom part (8) and a top cover (9), wherein the bottom part (8) has at least one recess (12) for receiving a journal or pin (14) mounted on the top cover.

3. A connecting element according to claim 2, characterized in that the bottom part (8) has two recesses (12, 13) for receiving in each case one of two journals (14, 15) or pins mounted on the top cover (9) and the recesses (12, 13) for receiving a journal or pin (14, 15), are of such size that the journal or pin fits in the recess with a force fit.

4. A connecting element according to claim 3, characterized in that the recesses (12, 13) for receiving a journal or pin (14, 15) are closed on the rear side (16) of the bottom part (8) and are arranged on opposite end portions of the bottom part (8), the one recess (12) being arranged symmetrically and the other recess (13) being arranged laterally with respect to the longitudinal centre line of the bottom part (8).

5. A connecting element according to claim 2, characterized in that in the bottom part (8) there is provided a recess (17) for receiving a spring (10), in particular a helical compression spring.

6. A connecting element according to one of the preceding claims, characterized in that on the rear side (16) of the bottom part (8) there are constructed reinforcing ribs (20) which extend approximately for the entire length of the bottom part (8).

7. A connecting element according to claim 1 and 2, characterized in that in the top cover (9) there is provided a stepped opening (28) for the eccentric head (24), with the step (32) of which opening the supporting disc (26) of the eccentric bolt (11) engages.

8. A connecting element according to one of the preceding claims, characterized in that both the bottom part (8) and also the top cover (9) consist of glassfibre-reinforced plastics material.

9. A connecting element according to claim 1, characterized in that in the region of the laterally displaced recess (13) in the bottom part (8) the retaining element (5) has a recess (34) the longitudinal edge (35) of which comes to rest on an upwardly projecting part (36) of the bottom part (8) which is formed by a thickened area (36) of material.

10. A connecting element according to one of claims 1 or 9, characterized in that the opening (31) in the retaining element (5) for the eccentric bolt (11) is of rectangular construction, the longitudinal axis of the rectangle running at right angles to the longitudinal axis of the retaining element (5).

11. A connecting element according to one of claims 1 or 8, characterized in that the retaining element (5) has a curvature which enters successively into engagement on one side with a camming curve (23) formed on the inside of the top cover and on the other side with the sloping face (21) formed in the bottom part (8) of the housing (4).

12. A connecting element according to one of the preceding claims, characterized in that the connecting hook (7) projecting from the front end (6) of the housing (4) is bent round towards the top cover (9).

13. A connecting element according to claim 1, characterized in that the bearing journal (19) of the eccentric bolt (11) is guided in a bearing bush (18) constructed in the bottom part (8) and closed towards the outside.

14. A connecting element according to one of the preceding claims, characterized in that the eccentric disc (27) has approximately the same diameter as the bearing journal (19) of the eccentric bolt (11) and the supporting disc (26) of the eccentric bolt (11) has a diameter that is larger than that of the eccentric head (24) which in its turn is larger than the diameter of the eccentric disc (27) and of the bearing journal (19).

**Revendications**

1. Elément de liaison (2) destiné à une liaison démontable de barres profilées, dont une barre profilée (3) présente des gorges longitudinales (39) en contre-dépouille et l'autre barre profilée (1) présente un profil creux destiné à recevoir par le côté frontal l'élément de liaison (2), l'élément de liaison (2) se composant d'un carter (4) pourvu d'ergots d'accouplement (37, 38) destinés à l'introduction dans l'entrée (40) de l'une des gorges longitudinales (39), carter dans lequel un élément de maintien (5) réalisé sous la forme d'un verrou, muni d'un crochet de liaison (7) unique dépassant de la face frontale (6) du carter (4), est disposé et peut se déplacer, à l'aide d'un boulon d'excentrique (11) traversant l'élément de maintien (5), suivant la direction longitudinale de l'élément de maintien, le boulon d'excentrique étant maintenu encliqueté de façon déformable par son extrémité de manipulation dans un alésage transversal (29) de la barre profilée (1) recevant l'élément de liaison (2) et étant poussé hors du carter (4), comme un bouton-poussoir, au moyen d'un ressort (10) s'engageant sur la face opposée de l'élément de maintien, et comportant une pente (21) montant vers l'intérieur dans le carter, pente pouvant s'engager sur une contre-pente réalisée sur l'élément de maintien (5), afin que le crochet de liaison (7) de l'élément de maintien (5) saisisse à l'arrière, pendant un mouvement de serrage, le bord de la gorge longitudinale (39), caractérisé en ce que le carter (4) est en deux parties, en ce que l'élément de maintien (5) est déplaçable pour le processus de serrage, par rotation du boulon d'excentrique (11), le long de la pente (21) dans le carter (4), à partir d'une position intermédiaire jusqu'à une position initiale, dans laquelle le crochet de liaison (7) saisit la gorge longitudinale (39) à l'arrière, en ce que l'élément de maintien (5) exécute exclusivement un déplacement longitudinal lors d'une rotation supplémentaire du boulon d'excentrique, en particulier lors du processus de blocage, et en ce que le boulon d'excentrique (11) prévu pour le guidage de l'élément de maintien (5) présente entre tête d'excentrique (24) et disque d'excentrique (27) un disque de soutien (26) disposé concentriquement à la tête d'excentrique (24).

2. Elément de liaison selon la revendication 1, caractérisé en ce que le carter (4) se compose d'une partie de fond (8) et d'un couvercle (9), la partie de fond (8) présentant au moins un évidement (12) destiné à recevoir un tourillon ou une tige (14) monté(e) sur le couvercle.

3. Elément de liaison selon la revendication 2, caractérisé en ce que la partie de fond (8) présente deux évidements (12, 13) destinés à recevoir chacun l'un de deux tourillons (14, 15) ou tiges montés sur le couvercle (9) et en ce que les évidements (12, 13) destinés à recevoir un tourillon ou une tige (14, 15) sont dimensionnés de manière que le tourillon ou la tige est fixé(e) dans l'évidement avec un ajustement pressé.

4. Elément de liaison selon la revendication 3, caractérisé en ce que les évidements (12, 13) destinés à recevoir un tourillon ou une tige (14, 15) sont fermés sur la face arrière (16) de la partie de fond (8) et sont disposés sur des parties d'extrémité opposées de la partie de fond (8), l'un des évidements (12) étant disposé de manière symétrique par rapport à l'axe longitudinal de la partie de fond (8), et l'autre évidement (13) étant disposé décalé latéralement par rapport à cet axe.

5. Elément de liaison selon la revendication 2, caractérisé en ce qu'une cavité (17) destinée à recevoir un ressort (10), en particulier un ressort spiral de pression, est prévue dans la partie de fond (8).

6. Elément de liaison selon l'une des revendications précédentes, caractérisé en ce que des nervures de renforcement (20) sont réalisées sur la face arrière (16) de la partie de fond (8) et s'étendent à peu près sur la longueur totale de la partie de fond (8).

7. Elément de liaison selon la revendications 1 ou 2, caractérisé en ce qu'un orifice à gradin (28) destiné à la tête d'excentrique (24) est prévu dans le couvercle (9), orifice sur le gradin (32) duquel le disque de soutien (26) du boulon d'excentrique (11) vient en appui.

8. Elément de liaison selon l'une des revendications précédentes, caractérisé en ce que tant la partie de fond (8) qu'également le couvercle (9) sont composés de matière plastique renforcée par fibres de verre.

9. Elément de liaison selon la revendication 1, caractérisé en ce que l'élément de maintien (5) présente, dans la zone de l'évidement (13) décalé latéralement dans la partie de fond (8), un évidement (34) dont l'arête (35) s'étendant longitudinalement vient en appui sur une partie (36) en saillie vers le haut de la partie de fond (8), qui est formée d'une accumulation de matière (36).

10. Elément de liaison selon l'une des revendications 1 ou 9, caractérisé en ce que l'orifice (31) destiné au boulon d'excentrique (11) dans l'élément de maintien (5) à une forme rectangulaire, l'axe longitudinal du rectangle étant perpendiculaire à l'axe longitudinal de l'élément de maintien (5).

11. Elément de liaison selon l'une des revendications 1 ou 8, caractérisé en ce que l'élément de maintien (5) présente une partie courbe qui s'engage successivement, d'un côté sur une rampe (23) réalisée sur la face intérieure de couvercle et, de l'autre côté, sur la pente (21) réalisée dans la partie de fond (8) du carter (4).

12. Elément de liaison selon l'une des revendications précédentes, caractérisé en ce que le crochet de liaison (7) dépassant de la face frontale (6) du carter (4) est recourbé vers le couvercle (9).

13. Elément de liaison selon la revendication 1, caractérisé en ce que le tourillon (19) du boulon d'excentrique (11) est guidé dans un coussinet (18) réalisé dans la partie de fond (8) et obturé vers l'extérieur.

14. Elément de liaison selon l'une des revendications précédentes, caractérisé en ce que le disque d'excentrique (27) présente un diamètre à peu près identique à celui du tourillon (19) du boulon d'excentrique (11) et en ce que le disque de soutien (26) du boulon d'excentrique (11) présente un diamètre supérieur à celui de la tête d'excentrique (24), qui est de son côté supérieur au diamètre du disque d'excentrique (27) et du tourillon (19).

FIG. 1

FIG.2

FIG.3

FIG. 5

FIG. 4

# FIG.6

# FIG.7

## FIG. 8

## FIG. 9